# EUROPEAN PATENT SPECIFICATION

(11) **EP 2 413 635 B1**
(45) Date of publication and mention of the grant of the patent: **05.09.2012**
(21) Application number: 10170952.5
(22) Date of filing: 27.07.2010
(51) Int. Cl.: H04W 52/02, H04W 36/14, H04W 36/16, H04W 48/18, H04W 88/06

(54) **Switching communication radio path based on power constraints**
Schalten eines Kommunikationsfunkpfades basierend auf Stromeinschränkungen
Commutation de voie radio de communication basée sur des contraintes d'alimentation électrique

(43) Date of publication of application: 01.02.2012
(73) Proprietor: Research In Motion Limited, Waterloo, ON N2L 3W8 (CA)
(72) Inventor: Lim, Miranda Bing Ying, Kanata Ontario K2K 3K2 (CA)
(74) Representative: Phillips, Emily Elizabeth

(56) References cited:
- EP-A1- 1 708 369
- EP-A2- 1 701 572
- IOANNIS MODEAS ET AL: "An Algorithm for Radio Resources Management in Integrated Cellular/WLAN Networks" IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168809 ISBN: 978-1-4244-1143-6
- JOE I ET AL: "A network selection algorithm considering power consumption in hybrid wireless networks" IEICE TRANSACTIONS ON COMMUNICATIONS, COMMUNICATIONS SOCIETY, TOKYO, JP LNKD- DOI:10.1093/IETCOM/E91-B.1.314, vol. E91B, no. 1, 1 January 2008 (2008-01-01), pages 314-317, XP001510262 ISSN: 0916-8516

## Description

### BACKGROUND

### Field:

The present application relates to mobile device communications, such as voice and data communication.

### Related art:

Mobile devices are used for voice and data communications. Some mobile devices can access multiple kinds of networks, such as a cellular network that can support one or more kinds of network operating standards, such as GSM, GPRS, EDGE, eVDO, DO, CDMA, LTE, WiMAX, and so on. Increasingly mobile devices also may be able to use wireless local area network technologies, such as those standardized under IEEE 802.11. Improving capabilities and a user experience with such devices remains important.

An algorithm for radio resources management in integrated cellular/WLAN networks by Ioannis Modeas et al. "An Algorithm for Radio Resources Management in Integrated Cellular/WLAN Networks" IEEE INTERNATIONAL SYMPOSIUM ON PERSONAL, INDOOR AND MOBILE RADIO COMMUNICATIONS. PIMRC, IEEE, pages 1 - 5, details a simple distributed algorithm for enabling terminals to build prioritised lists of target access network independently for each of their connections. The algorithm provides specific details on how core network components can treat each connection based on a number of parameters.

A network selection algorithm considering power consumption in hybrid wireless networks by Inwhee Joe et al. "A network selection algorithm considering power consumption in hybrid wireless networks" IEICE TRANSACTIONS ON COMMUNICATIONS, COMMUNICATIONS SOCIETY, TOKYO, pages 314-317, details a network selection algorithm that considers power consumption in hybrid wireless networks for vertical handover. The algorithm comprises a power consumption prediction algorithm and a final network selection algorithm. The power consumption prediction algorithm estimates the expected lifetime of a mobile station based on the current battery level, traffic class and power consumption. If the expected lifetime of the mobile station is not long enough compared to a handover delay, the network is removed from a candidate network list. The network selection algorithm consists of an Analytic Hierarchical Process and Grey Relational Analysis.

Aspects and features of the claimed subject matter are set out in the appended claims.

### BRIEF DESCRIPTION OF THE DRAWINGS

Reference will now be made, by way of example, to the accompanying drawings which show example embodiments of the present application, and in which:

FIG. 1 shows, in block diagram form, an example system for managing enterprise-related mobile calls, including an enterprise communications platform;

FIG. 2 depicts example of components of an example mobile device;

FIG. 3 depicts an example form factor of a mobile device;

FIGs. 4 and 5 depict methods of selecting a network on which to establish a call, or to switch a call, based on power constraints, and estimates of power consumption/battery life of the mobile device, depending on network selection; and

FIGs. 6 and 7 depict examples of methods that can be used in obtaining data for determining estimates of battery life using different networks for a given communication session, of a predicted duration.

### DESCRIPTION

Mobile devices are increasingly used for communication, such as voice calling and data exchange. Also, mobile devices increasingly can use a wider variety of network for such communication. For example, a mobile device can have a broadband cellular radio and a local area wireless network radio. Additionally, the broadband cellular capability of a mobile device may itself support a variety of standards, or protocols that have different communication capabilities, such as GSM, GPRS, EDGE and LTE.

While data exchange or a call is occurring, conditions on the mobile device may also be evolving. For example, a battery or other limited source of power for the mobile device may be draining, and network and radio conditions also may be changing. Improvements can be made in how a mobile device uses its radio resources for communication, while handling other constraints.

For example, in order to establish a new call from a mobile device (or to receive a new call), a mobile device can determine conditions on two or more networks (*e.g*., Networks A and B). Based on one or more criteria, the mobile device also can estimate a length of the call, and power factors for each network. With such information, the mobile device can estimate an amount of power required to perform the call on each of Network A and Network B. A current battery status can be checked, and if the battery status indicates that the available power remaining may be inadequate to complete the call on one of the networks (*e.g.*, Network A), then the mobile device can recommend Network B, or cause the call to be initiated over Network B, if Network B would result in at least a threshold amount lower power consumption. Such network selection can be made even though a network condition on Network A may be expected to yield a better call experience, or be less expensive.

In another example, a call can be ongoing on a given network, *e.g*., Network A, and based on battery status measurements, the mobile device can estimate that only a certain number of minutes or amount of data can be communicated before a power threshold is reached. The mobile device can cause the call to be handed over to Network B, if an expected power consumption on Network B is less than on Network A by at least a threshold.

Information about call duration can be maintained to assist in determining whether to switch to or begin a call on a given network. For example, average call duration to a particular number or destination can be tracked, calendar information about a call can be accessed, and statistics can be kept for categories of calls. Such call duration information can be used as an input in determining how much power may be saved if using one network instead of another network, for a particular data communication session.

The mobile device can be configured to present an option to select from along two or more available networks, or to switch automatically, or to initiate a call automatically based on outputs of the method aspects described above.

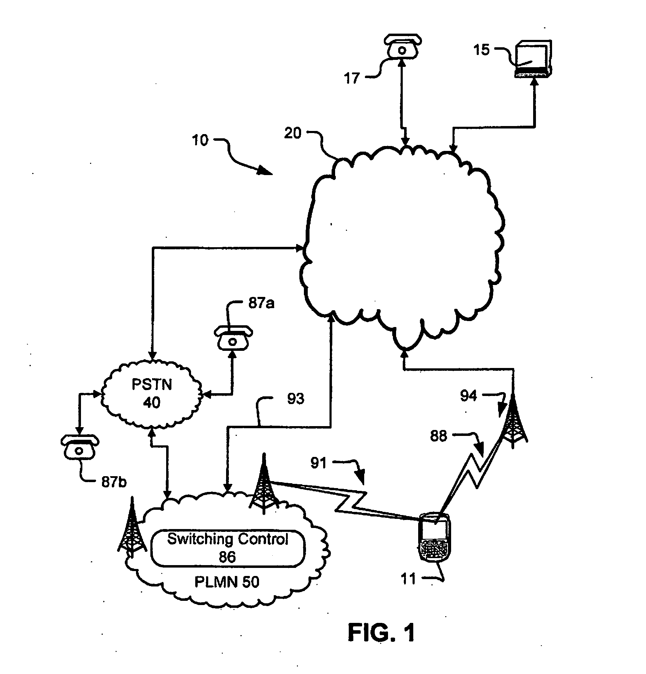

Reference is now made to Figure 1, which shows, in block diagram form, an example system arrangement 10, for explaining aspects according to this disclosure in more detail. FIG. 1 depicts that arrangement 10 includes a network 20, which can be comprised of one or more internets and other networks, and can include, for example, a corporate intranet, as well as components, of public networks, such as components of the Internet. FIG. 1 depicts that communication devices, such as a telephone 17 and a computer 15 can be coupled to communicate using network 20. PSTN 40 also is depicted as being in communication with network 20. Two PSTN telephones 87a and 87b are depicted as being reachable over the PSTN. a Public Land Mobile Network (PLMN) 50 also is depicted, and includes a switching control 86. PLMN 50 is coupled to PSTN 40, and to network 20, through a data communication path 93. Data communication path 93 can include one or more packet networks, or linkages between packet networks. Separate identification of network 20 and path 93 is at least partially a matter of convenience, in that path 93 also in many circumstances could be considered part of network 20. One operative distinction being that PSTN 40 operates over circuit-switched lines, while communication path 93, and network 20 can include a wide variety uf digital communication technologies, including packet switching technologies and protocols. For example, Internet Protocol (IP) addressing, and Session Initiation Protocol (SIP) can be used for establishing and conducting voice communications carried over path 93 and network 20.

A mobile device 11 is depicted as communicating with PLMN 50 using cellular communication 91. Cellular communication 91 can itself be implemented using a wide variety of technologies, and can also include voice and data network components (*e.g*., a voice channel and a data channel time, frequency, or code division multiplexed, according to any of a variety of implemented or proposed cellular communication approaches). Mobile device 11 also can communicate using wireless Local Area Network (LAN) technologies 88, such as those according to the IEEE 802.11 series of standards and proposals. Communication using such WLAN technologies 88 can occur between mobile device 11 and a base station 94, which in turn is coupled with network 20.

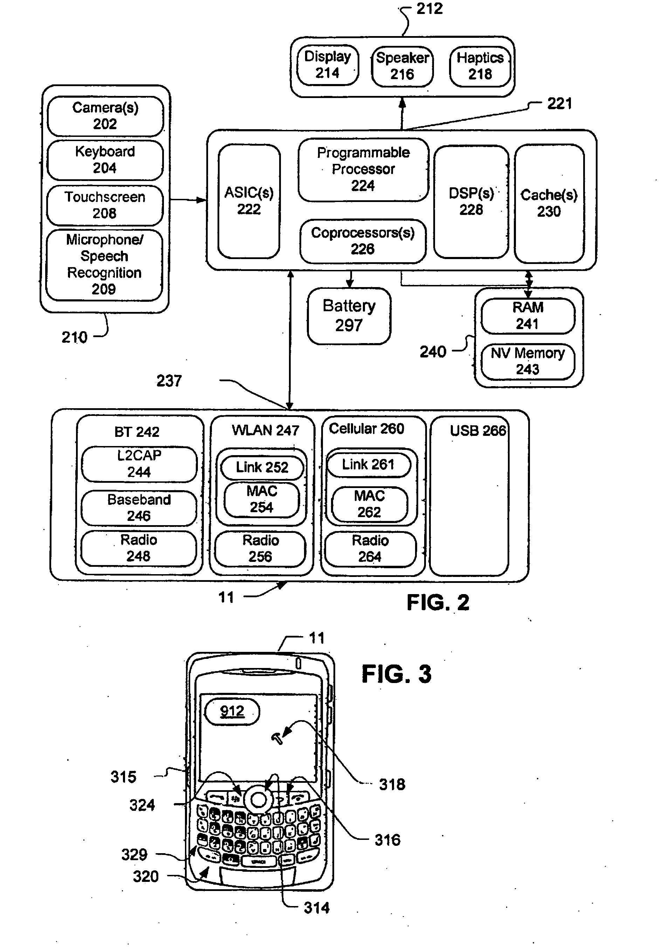

Figure 2 depicts example components that can be used in implementing mobile device 11 according to the above description. Figure 2 depicts that a processing module 221 May be composed of a plurality of different processing elements, including one or more ASICs 222, a programmable processor 224, one or more co-processors 226, which each can be fixed function, reconfigurable or programmable, one or more digital signal processors 228. For example, an ASIC or co-processor 222 may be provided for implementing graphics functionality, encryption and decryption, audio filtering, and other such functions that often involve many repetitive, math-intensive steps. Processing module 221 can comprise memory to be used during processing, such as one or more cache memories 230.

Processing module 221 communicates with mass storage 240, which can be composed of a random Access Memory 241 and of non-volatile memory 243. Non-volatile memory 243 can be implemented with one or more of Flash memory, PROM, EPROM, and so on. Non-volatile memory 243 can be implemented as flash memory, ferromagnetic, phase-change memory, and other non-volatile memory technologies. Non-volatile memory 243 also can store programs, device state, various user information, one or more operating systems, device configuration data, and other data that may need to be accessed persistently.

User input interface 210 can comprise a plurality of different sources of user input, such as a camera 202, a keyboard 204, a touchscreen 208, and a microphone, which can provide input to speech recognition functionality 209.

Processing module 221 also can use a variety of network communication protocols, grouped for description purposes here into a communication module 237, which can include a Bluetooth communication stack 242, which comprises a L2CAP layer 244, a baseband 246 and a radio 248. Communications module 237 also can comprise a Wireless Local Area Network (247) interface, which comprises a link layer 252 with a MAC 254, and a radio 256. Communications module 237 also can comprise a cellular broadband data network interface 260, which in turn comprises a link layer 261, with MAC 262. Cellular interface 260 also can comprise a radio for an appropriate frequency spectrum 264, Communications module 237 also can comprise a USB interface 266, to provide wired data communication capability. Other wireless and wired communication technologies also can be provided, and this description is exemplary.

Referring to Figure 3, there is depicted an example of mobile device 11. Mobile device 11 comprises a display 312 and a cursor or view positioning device, here depicted as a trackball 314, which may serve as another input member and is both rotational to provide selection inputs and can also be pressed in a direction generally toward housing to provide another selection input. Trackball 314 permits multi-directional positioning of a selection cursor 318, such that the selection cursor 318 can be moved in an upward direction, in a downward direction and, if desired and/or permitted, in any diagonal direction. The trackball 314 is in this example situated on a front face (not separately numbered) of a housing 320, to enable a user to maneuver the trackball 314 while holding mobile device 11 in one hand. In other embodiments, a trackpad or other navigational control device can be implemented as well.

The mobile device 11 in Figure 3 also comprises a programmable convenience button 315 to activate a selected application such as, for example, a calendar or calculator. Further, mobile device 11 can include an escape or cancel button 316, a menu or option button 324 and a keyboard 320. Menu or option button 324 loads a menu or list of options on display 312 when pressed. In this example, the escape or cancel button 316, menu option button 324, and keyboard 329 are disposed on the front face of the mobile device housing, while the convenience button 315 is disposed at the side of the housing. This button placement enables a user to operate these buttons while holding mobile device 11 in one hand. The keyboard 329 is, in this example, a standard QWERTY keyboard.

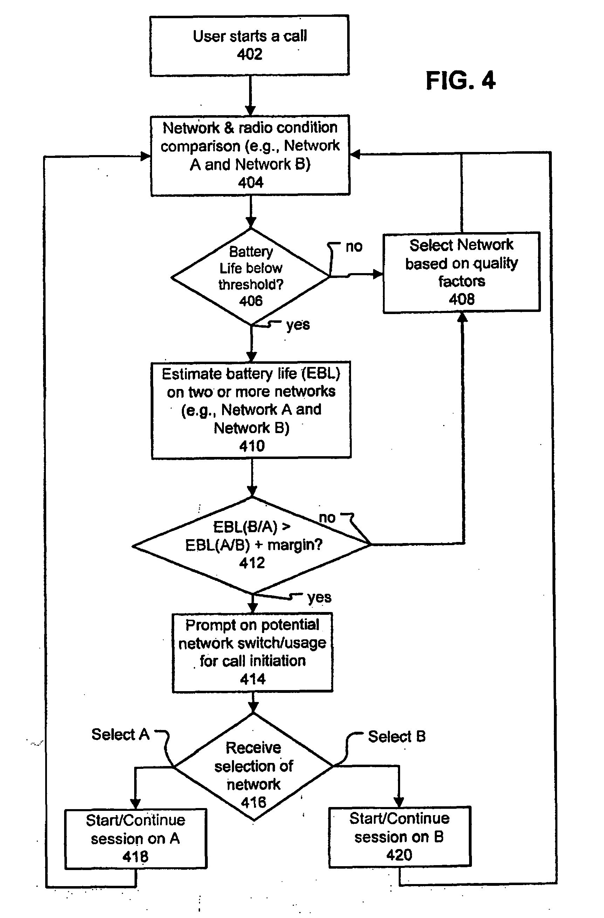

FIG. 4 depicts a first example method of selecting a communication network to use for a call involving a mobile device (or more generally a communication session), in which a status of a battery powering the mobile device can trigger elements of the depicted method, described below. The method of FIG. 4 exemplifies a situation where a new call is to begin, and a network for carrying the call is to be selected. Thus, a user can start a call (402), such as by opening an application, or otherwise interacting with an interface of mobile device to initiate the call. A comparison of conditions on a plurality of networks is conducted (404). For example, signal strength requirements to communicate with a base station of a wireless LAN, and a tower of a cellular communication system can be assessed. Congestions on the network also can be monitored. Variability in such parameters also can be assessed, which also can be relevant to call quality considerations.

An assessment of energy remaining in a battery (or more generally, any energy storage element or elements, such as a fuel cell) is made, and in particular, a determination (406) whether a remaining amount of energy ("battery life") is below a threshold. If battery life is not below a threshold, then in one example, the call can be conducted using the network that has the higher(est) call quality conditions (408). However, if the battery life is below a threshold (such that an estimated amount of energy remaining in the battery is less than a threshold), then estimates of battery life (EBL) can be formed (410) for two or more networks which could be used for the call, even though perhaps call quality may be less on, or toll charges more, on one or more of those networks (example of FIG. 4 is for two networks, network A and network B). In other words, EBLs can be produced that predict how long a battery would last, if a given communication path were used for the call to be setup.

These estimates also can be formed prior to determining that battery life is below a threshold (406), however if battery life is generally high, then these calculations may be unnecessary. Based on the EBLs calculated (410), a determination (412) can be made as to whether either network A or network B has an EBL greater than the other by at least a margin (or threshold) more than the other network. For example, the margin can be set at a percentage of the EBL of one or more of Network A and Network B. If one of the networks offers at least a marginally longer EBL, then the choice (or action) to use that network can be presented (or taken) (414). For example, a prompt on an interface can be presented indicating than battery life may be of concern, and that resource may be conserved by using a recommended network with a longer EBL. A selection responsive to such a prompt also can be received (416) through the interface. Responsive to the selection, the call can be started or continued on the selected network (*e.g*., if Network A is selected, the call can be started on Network A (418), or conversely for Network B (420)), For example, a user may select the network with the longer EBL for the call, under some circumstances, and not others. In other implementations, the mobile device can be configured to automatically select, or propose the longer EBL network as a default for the call. Thus, FIG. 4 presents a method in which a mobile device that can use a plurality of networks, accessed through a plurality of network interfaces, is operable to select from among the networks, in a constrained battery power situation, a network that would be expected to provide at least a margin better battery life than the other available networks. In particular, the requirement to have at least a margin longer expected battery life allows a better user experience, where the choice of networks is not proposed or implemented where one network may have only a small amount expected longer better battery life. As such, the margin should be set to greater than a small or insignificant amount, such as at least 10% of the total battery life, or 10% of the expected battery life of one or more of the networks. The margin (also can be called a threshold) can be configured based on particular characteristics of each mobile device, or based on particular criteria of a user of each mobile device.

The method can relate to any number of networks, even though only two are involved in this example. In this disclosure, one network interface can interface with multiple networks options; for example, a call can be carried on a cellular data channel as packets or a cellular voice channel, which involves one or more portions of the PSTN, or over a wireless LAN interface, or a Bluetooth link (or another personal area network type) to another transceiver. For these purposes, each combination of interface, and transport can be considered a different network, where such combination may provide a different expected battery life that can be considered in the decision whether to use that combination of interface and transport for a given call.

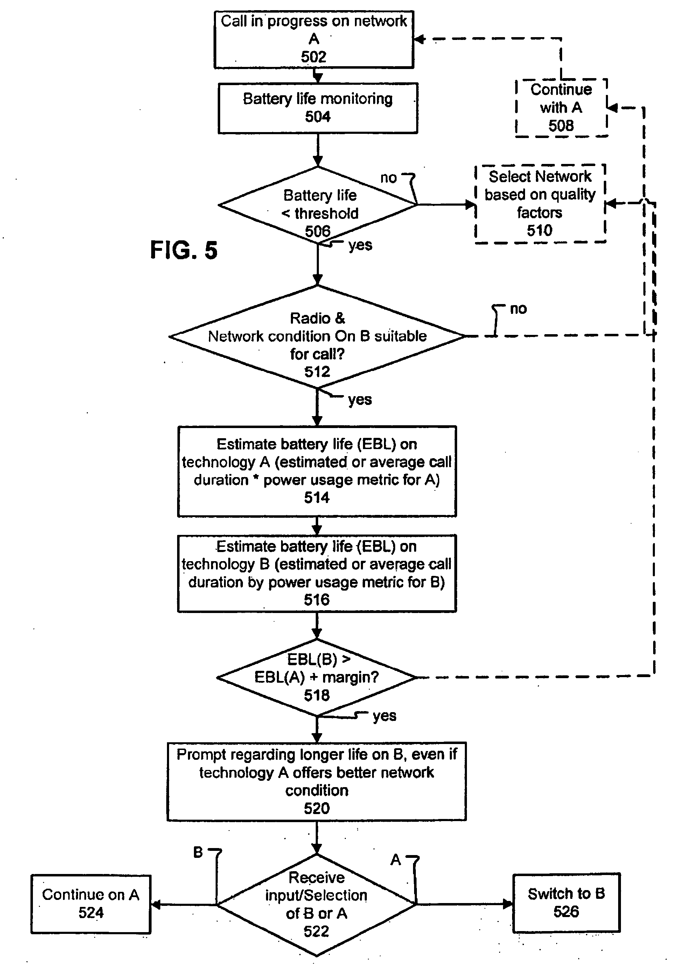

FIG. 4 principally concerned an example method of initiating a call (or communication session, generally). FIG. 5 depicts a method more focused on in-progress calls.

FIG. 5 depicts a method in which, for example, a call is in progress on network A (502). A battery status of the mobile device is monitored (504), and responsive to detecting a threshold condition in the monitored battery status (505), a determination (512) can be made as to whether one or more other networks can be used for the in-progress call (e.g., by checking whether radio and network conditions on Network B are suitable for the call). If there is at least one other network (*e.g*., network B) available (or capable) for the call, then expected battery life calculations for each of network A and network B can be conducted (514, 516). If the non-active network (network B in this example) provides at least a threshold (marginal) amount more expected battery life (518), then a prompt can be presented (520) on the interface to query whether the call should be transferred to network B. Upon receiving a response (522), the response is parsed to determine whether to switch to network B (526), or remain (524) on network A. Thus, FIG. 5 depicts that a choice to switch networks can be presented responsive to detecting a battery condition that may present a problem to complete a call in progress.

In implementations according to this disclosure, the threshold amount of battery life can be set based on an expected duration of a call, or a remaining expected duration of a call in progress. For example, the threshold can be set such that once the battery life gets to a point where the expected duration of the call may not be serviceable on the current or default network, then a choice to select or switch to a different network can be presented, qualified by the further determination that the different network presents at least a significant margin better expected battery life, such as 10% or more better expected battery life.

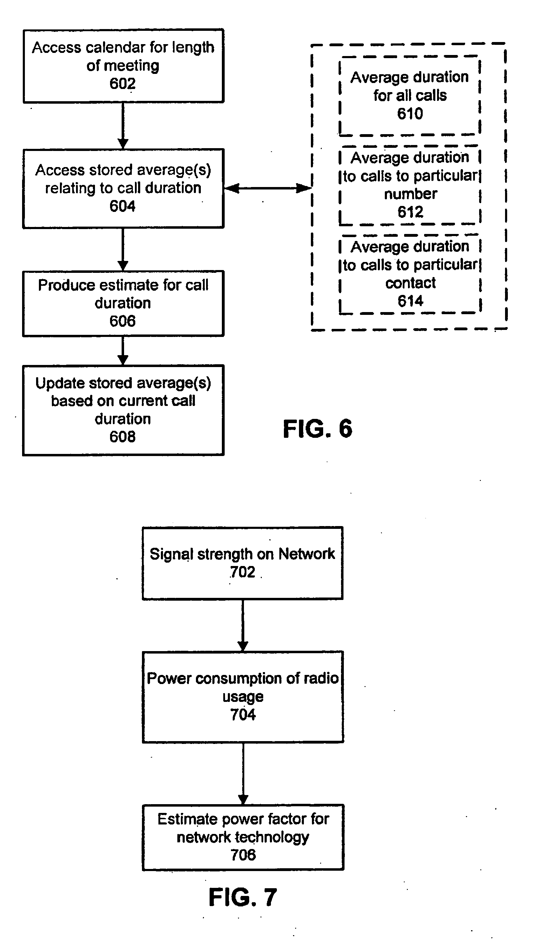

In order to determine expected call durations, which can be used in setting the threshold to determine battery level conditions, as well as expected battery life calculations, call history information can be preserved. FIGs. 6 and 7 depict example approaches to obtaining and producing information that can be used in methods according to the examples of FIGs. 4 and 5.

FIG. 6 depicts an example where a calendar storing information about a call in progress or to be initiated can be accessed (602) to determine whether there is a set duration. For example, the calendar may indicate that the call is set for an hour duration, less or more. Further, information about previous calls,such as calls to the particular number, calls for the particular meeting or event, or a weighted average of some subset of calls serviced by the mobile device can be accessed (604). For example, the call to be initiated can be a regular call, and over some time, the mobile device can develop statistics about how long the call generally lasts. These approaches are depicted by stored averages for all calls (610), average duration of calls to a particular number (612), or average duration of calls to a particular contact (614), which may or may not be on the same number. Such approaches provide examples of how an estimate of call duration can be produced (606). Stored averages or raw data to compute such averages can be updated for each call conducted using mobile device 11 (608).

In conjunction with an estimated call duration, a power factor for each network can be used in determining the EBL for that network. FIG. 7 depicts an example, where the power factor can be estimated by determining a signal strength on the network (702), since signal strength may indicate how much transmit power would be expected. Metrics concerning the overall power consumption of the radio for the network also can be accessed (704), as well as other information, such that a power factor can be produced (706).

In the foregoing, separate boxes or illustrated separation of functional elements of illustrated systems does not necessarily require physical separation of such functions, as communications between such elements can occur by way of messaging, function calls, shared memory space, and so on, without any such physical separation As such, functions need not be implemented in physically or logically separated platforms, although they are illustrated separately for ease of explanation herein.

For example, different embodiments of devices can provide some functions in an operating system installation that are provided at an application layer or in a middle layer in other devices. Different devices can have different designs, such that while some devices implement some functions in fixed function hardware, other devices can implement such functions in a programmable processor with code obtained from a computer readable medium.

Further, some aspects may be disclosed with respect to only certain examples. However, such disclosures are not to be implied as requiring that such aspects be used only in embodiments according to such examples.

The above description occasionally describes relative timing of events, signals, actions, and the like as occurring "when" another event, signal, action, or the like happens. Such description is not to be construed as requiring a concurrency or any absolute timing, unless otherwise indicated.

Certain adaptations and modifications of the described embodiments can be made. Aspects that can be applied to various embodiments may have been described with respect to only a portion of those embodiments, for sake of clarity. However, it is to be understood that these aspects can be provided in or applied to other embodiments as well. Therefore, the above discussed embodiments are considered to be illustrative and not restrictive.

## Claims

1. A method of operating a communication device (11), comprising:
determining (404, 512) operational conditions for a first communication network (88) and a second communication network (91), which the communication device (11) is operable to use for communicating;
determining (406, 504, 506) a condition of a energy storage element (297) for powering the device;
determining (410, 514, 516) expected energy consumption for each of the first communication network and the second communication network based on one or more of prior communication session characteristics and respective power consumption factors associated with the first and second communication networks;
determining (410, 514, 516) for a communication session, whether the expected energy consumption for using the first communication network is less than using the second communication network by at least a threshold (412, 518) and responsively providing (414, 520) an indication on an interface of the device, the indication prompting a selection (416, 522) of an active communication network, between either the first communication network or the second communication network; and
if the selected communication network is not currently active, then switching (416, 418, 420, 522, 524, 526) to the selected communication network for the communication session.

2. The method of claim 1, wherein the communication session is currently being conducted (502).

3. The method of claim 1-2, wherein the communication session is to be initiated (402), and neither the first communication network nor the second communication network currently is active.

4. The method of claim 1-3, further comprising determining (410, 14, 516) the expected energy consumption for each of the first communication network and the second communication network based on a predicted length of the communication session.

5. The method of claim 1-4, further comprising determining (410, 514, 516) the expected energy consumption for each of the first communication network and the second communication network based on an average length of previous communication sessions.

6. The method of claim 1-5, wherein the indication is provided from a configuration storage (241, 243) indicating a preference whether to use the lower-energy consumption communication network.

7. The method of claim 1-6, wherein the indicating is performed by providing an indication on an interface of the mobile device, and the accepting of the selection is performed by accepting a selection through the interface.

8. The method of claim 1-7 wherein the threshold is determined based on an expected amount of energy required to complete a new communication session or an ongoing communication session.

9. The method of claim 1-8, wherein the plurality of communication networks comprise a wireless local area network (88) and a cellular access network (91).

10. A computer readable medium (241, 243) storing instructions for programming a processor (224) to perform a method according to any of claims 1-9.

11. A mobile device (11), comprising:
a plurality of interfaces (242, 247, 260) to communication networks; and
a processor (224) programmed to select, for a communication session, an active communication network interface (260, 247) from among the plurality of communication network interfaces (260, 247) by detecting a threshold condition in an energy storage element for powering the mobile device, responsive to detecting (406) the threshold condition, determining (412, 518) whether usage of one of the communication networks for the communication session would save at least a threshold amount of energy if used, the determining comprising determining (410, 514, 516) expected energy consumption for each of the first communication network and the second communication network based on one or more of prior communication session characteristics and respective power consumption factors associated with the first and second communication networks, and responsively selecting (416-420,522-526) the interface to that communication network for the communication session.

12. The mobile device of claim 11, wherein interfaces comprise an interface to a local wireless network (247) and an interface to a cellular communication network (260).

13. The mobile device of claim 11, wherein the process is further programmed to calculate the threshold condition for the energy storage element based on the expected energy consumption in the communication session for at least two of the plurality of communication networks.

14. The mobile device of claim 11, wherein the processor is programmed to determine the expected energy consumption using a power factor for each of the plurality of communication networks, and to compare an estimate of the expected amount of energy consumed in the communication session using each of the communication networks to an estimated amount of energy remaining in the energy storage element.

## Patentansprüche

1. Ein Verfahren zum Betreiben einer Kommunikationsvorrichtung (11), das aufweist:
Bestimmen (404, 512) von Betriebsbedingungen für ein erstes Kommunikationsnetzwerk (88) und ein zweites Kommunikationsnetzwerk (91), die die Kommunikationsvorrichtung (11) zur Kommunikation verwenden kann;
Bestimmen (406, 504, 506) eines Zustands eines
Energiespeicherelements (297) zum Versorgen der Vorrichtung mit Energie;
Bestimmen (410, 514, 516) eines erwarteten Energieverbrauchs für jedes des ersten Kommunikationsnetzwerks und des zweiten Kommunikationsnetzwerks basierend auf einem oder mehreren aus Charakteristiken einer früheren Kommunikationssitzung und jeweiliger Leistungsverbrauchsfaktoren, die mit den ersten und zweiten Kommunikationsnetzwerken assoziiert sind;
Bestimmen (410, 514, 516) für eine Kommunikationssitzung, ob der erwartete Energieverbrauch zur Verwendung des ersten Kommunikationsnetzwerks geringer ist als zur Verwendung des zweiten Kommunikationsnetzwerks um zumindest eine Schwelle (412, 518) und in Reaktion Vorsehen (414, 520) einer Anzeige auf einer Schnittstelle der Vorrichtung, wobei die Anzeige eine Auswahl (416, 522) eines aktiven Kommunikationsnetzwerks zwischen entweder dem ersten Kommunikationsnetzwerk oder dem zweiten Kommunikationsnetzwerk veranlasst; und
wenn das ausgewählte Kommunikationsnetzwerk aktuell nicht aktiv ist,
dann Schalten (416, 418, 420, 522, 524, 526) zu dem ausgewählten Kommunikationsnetzwerk für die Kommunikationssitzung.

2. Das Verfahren gemäß Anspruch 1, wobei die Kommunikationssitzung aktuell durchgeführt wird (502).

3. Das Verfahren gemäß Anspruch 1-2, wobei die Kommunikationssitzung zu initiieren ist (402), und weder das erste Kommunikationsnetzwerk noch das zweite Kommunikationsnetzwerk aktuell aktiv ist.

4. Das Verfahren gemäß Anspruch 1-3, das weiter aufweist ein Bestimmen (410, 514, 516) des erwarteten Energieverbrauchs für jedes des ersten Kommunikationsnetzwerks und des zweiten Kommunikationsnetzwerks basierend auf einer vorhergesagten Länge der Kommunikationssitzung.

5. Das Verfahren gemäß Anspruch 1-4, das weiter aufweist ein Bestimmen (410, 514, 516) des erwarteten Energieverbrauchs für jedes des ersten Kommunikationsnetzwerks und des zweiten Kommunikationsnetzwerks basierend auf einer durchschnittlichen Länge von früheren Kommunikationssitzungen.

6. Das Verfahren gemäß Anspruch 1-5, wobei die Anzeige von einem Konfigurationsspeicher (241, 243) vorgesehen wird, die eine Präferenz anzeigt, ob das Kommunikationsnetzwerk mit dem geringeren Energieverbrauch zu verwenden ist.

7. Das Verfahren gemäß Anspruch 1-6, wobei das Anzeigen durchgeführt wird durch Vorsehen einer Anzeige auf einer Schnittstelle der mobilen Vorrichtung, und das Akzeptieren der Auswahl durchgeführt wird durch Akzeptieren einer Auswahl über die Schnittstelle.

8. Das Verfahren gemäß Anspruch 1-7, wobei die Schwelle bestimmt wird basierend auf einer erwarteten Menge von erforderlicher Energie, um eine neue Kommunikationssitzung oder eine laufende Kommunikationssitzung durchzuführen.

9. Das Verfahren gemäß Anspruch 1-8, wobei die Vielzahl von Kommunikationsnetzwerken ein drahtloses lokales Netzwerk (88) und ein zellulares Zugangsnetzwerk (91) aufweisen.

10. Computerlesbares Medium (241, 243) zum Speichern von Anweisungen zum Programmieren eines Prozessors (224), ein Verfahren gemäß einem der Ansprüche 1-9 durchzuführen.

11. Eine mobile Vorrichtung (11), die aufweist:
eine Vielzahl von Schnittstellen (242, 247, 260) zu Kommunikationsnetzwerken; und
einen Prozessor (224), der programmiert ist zum Auswählen, für eine Kommunikationssitzung, einer aktiven Kommunikationsnetzwerk-Schnittstelle (260, 247) aus der Vielzahl der Kommunikationsnetzwerk-Schnittstellen (260, 247) durch Erfassen einer Schwellenbedingung in einem Energiespeicherelement für eine Energieversorgung der mobilen Vorrichtung, in Reaktion auf das Erfassen (406) der Schwellenbedingung,
Bestimmen (412, 518), ob eine Verwendung eines der Kommunikationsnetzwerke für die Kommunikationssitzung zumindest eine Schwellenmenge von Energie einsparen würde, wenn verwendet, wobei das Bestimmen aufweist ein Bestimmen (410, 514, 516) eines erwarteten Energieverbrauchs für jedes der ersten Kommunikationsnetzwerks und des zweiten Kommunikationsnetzwerks basierend auf einem oder mehreren aus Charakteristiken einer früheren Kommunikationssitzung und jeweiliger Leistungsverbrauchsfaktoren, die mit den ersten und zweiten Kommunikationsnetzwerken assoziiert sind, und in Reaktion Auswählen (416-420, 522 -526) der Schnittstelle zu diesem Kommunikationsnetzwerk für die Kommunikationssitzung.

12. Die mobile Vorrichtung gemäß Anspruch 11, wobei die Schnittstellen eine Schnittstelle zu einem lokalen drahtlosen Netzwerk (247) und eine Schnittstelle zu einem zellularen Kommunikationsnetzwerk (260) aufweisen.

13. Die mobile Vorrichtung gemäß Anspruch 11, wobei das Verfahren weiter programmiert ist zum Berechnen der Schwellenbedingung für das Energiespeicherelement basierend auf dem erwarteten Energieverbrauch in der Kommunikationssitzung für zumindest zwei der Vielzahl von Kommunikationsnetzwerken.

14. Die mobile Vorrichtung gemäß Anspruch 11, wobei der Prozessor programmiert ist zum Bestimmen des erwarteten Energieverbrauchs unter Verwendung eines Leistungsfaktors für jedes der Vielzahl von Kommunikationsnetzwerken und zum Vergleichen einer Schätzung der erwarteten Menge von Energie, die in der Kommunikationssitzung verbraucht wird, unter Verwendung jedes der Kommunikationsnetzwerke, mit einer geschätzten Menge von Energie, die in dem Energiespeicherelement verbleibt.

## Revendications

1. Procédé permettant de faire fonctionner un dispositif de communication (11), comprenant le fait :
de déterminer (404, 512) des conditions fonctionnelles pour un premier réseau de communication (88) et un deuxième réseau de communication (91), lequel dispositif de communication (11) peut fonctionner pour être utilisé lors d'une communication ;
de déterminer (406, 504, 506) une condition d'un élément de stockage d'énergie (297) pour alimenter le dispositif ;
de déterminer (410, 514, 516) une consommation d'énergie attendue pour chacun du premier réseau de communication et du deuxième réseau de communication sur la base d'une ou plus des caractéristiques de session de communication précédente et des facteurs de consommation d'énergie respectifs associés aux premier et deuxième réseaux de communication ;
de déterminer (410, 514, 516) pour une session de communication, si la consommation d'énergie attendue permettant d'utiliser le premier réseau de communication est inférieure à celle permettant d'utiliser le deuxième réseau de communication par au moins un seuil (412, 518) et, en réponse, de fournir (414, 520) une indication sur une interface du dispositif, l'indication demandant une sélection (416, 522) d'un réseau de communication actif, entre le premier réseau de communication ou le deuxième réseau de communication ; et
de commuter (416, 418, 420, 522, 524, 526) ensuite, si le réseau de communication sélectionné n'est pas actuellement actif, vers le réseau de communication sélectionné pour la session de communication.

2. Procédé de la revendication 1, dans lequel la session de communication est en train d'être effectuée (502).

3. Procédé de la revendication 1 et de la revendication 2, dans lequel la session de communication doit être initiée (402), et ni le premier ni le deuxième réseau de communication ne sont actuellement actifs.

4. Procédé des revendications 1 à 3, comprenant en outre la détermination (410, 514, 516) de la consommation d'énergie attendue pour chacun du premier réseau de communication et du deuxième réseau de communication sur la base d'une longueur prévue de la session de communication.

5. Procédé des revendications 1 à 4, comprenant en outre la détermination (410, 514, 516) de la consommation d'énergie attendue pour chacun du premier réseau de communication et du deuxième réseau de communication sur la base d'une longueur moyenne de sessions précédentes de communication.

6. Procédé des revendications 1 à 5, dans lequel l'indication est fournie à partir d'une mémoire de configuration (241, 243) indiquant une préférence du choix d'utilisation du réseau de communication à faible consommation d'énergie.

7. Procédé des revendications 1 à 6, dans lequel l'indication est effectuée en fournissant une indication sur une interface du dispositif mobile, et l'acceptation de la sélection est effectuée en acceptant une sélection par l'intermédiaire de l'interface.

8. Procédé des revendications 1 à 7, dans lequel le seuil est déterminé sur la base d'une quantité attendue d'énergie requise pour compléter une nouvelle session de communication ou une session de communication en cours.

9. Procédé des revendications 1 à 8, dans lequel la pluralité de réseaux de communication comprend un réseau local sans fil (88) et un réseau d'accès cellulaire (91).

10. Support (241, 243) lisible par ordinateur stockant des instructions de programmation d'un processeur (224) pour exécuter un procédé selon l'une des revendications 1 à 9.

11. Dispositif mobile (11), comprenant :
une pluralité d'interfaces (242, 247, 260) de réseaux de communication ; et
un processeur (224) programmé pour sélectionner, pour une session de communication, une interface (260, 247) de réseau de communication actif parmi la pluralité d'interfaces (260, 247) de réseau de communication en détectant une condition seuil dans un élément de stockage d'énergie pour alimenter le dispositif mobile, en réponse à la détection (406) de la condition seuil, en déterminant (412, 518) si l'utilisation de l'un des réseaux de communication pour la session de communication peut sauvegarder au moins une quantité seuil d'énergie en cas d'utilisation, la détermination comprenant le fait de déterminer (410, 514, 516) une consommation d'énergie attendue pour chacun du premier réseau de communication et du deuxième réseau de communication sur la base d'une ou plus des caractéristiques de session de communication précédente et des facteurs de consommation d'énergie respectifs associés aux premier et deuxième réseaux de communication, et, en réponse, de sélectionner (416-420, 522-526) l'interface de ce réseau de communication pour la session de communication.

12. Dispositif mobile de la revendication 11, dans lequel des interfaces comprennent une interface d'un réseau local sans fil (247) et une interface d'un réseau de communication cellulaire (260).

13. Dispositif mobile de la revendication 11, dans lequel le procédé est en outre programmé pour calculer la condition seuil de l'élément de stockage d'énergie sur la base de la consommation d'énergie attendue dans la session de communication pour au moins deux réseaux de la pluralité de réseaux de communication.

14. Dispositif mobile de la revendication 11, dans lequel le processeur est programmé pour déterminer la consommation d'énergie attendue en utilisant un facteur de puissance pour chacun de la pluralité de réseaux de communication, et pour comparer une estimation de la quantité attendue de l'énergie consommée pendant la session de communication en utilisant chacun des réseaux de communication à une quantité estimée de l'énergie restante dans l'élément de stockage d'énergie.
